**Europäisches Patentamt**

**European Patent Office**

**Office européen des brevets**

(19)

(11) Numéro de publication: **0 133 072**
**A2**

(12)

# DEMANDE DE BREVET EUROPEEN

(21) Numéro de dépôt: **84401366.4**

(22) Date de dépôt: **27.06.84**

(51) Int. Cl.⁴: **B 60 C 15/02**
**B 60 C 19/04**

(30) Priorité: **22.07.83 FR 8312202**
**29.03.84 FR 8404949**

(43) Date de publication de la demande:
**13.02.85 Bulletin 85/7**

(84) Etats contractants désignés:
**BE CH DE GB IT LI NL**

(71) Demandeur: **Marquet, Christian Jean Roger**
**58 rue Jules Vallès**
**F-93600 Aulnay Sous Bois (Seine Saint Denis)(FR)**

(72) Inventeur: **Marquet, Christian Jean Roger**
**58 rue Jules Vallès**
**F-93600 Aulnay Sous Bois (Seine Saint Denis)(FR)**

(74) Mandataire: **Cabinet BERT, DE KERAVENANT &**
**HERRBURGER**
**115, Boulevard Haussmann**
**F-75008 Paris(FR)**

(54) **Roue de bicyclette équipée d'un pneumatique de type boyau.**

(57)   a) Ensemble jante-pneumatique de type "boyau".

b) Ensemble caractérisé en ce que les bords (36, 37) obtenus par rabattement des bandes latérales (34, 35) de la carcasse (32) sont cousus l'un sur l'autre, par une couture traversante de façon à former un bourrelet (39) et la jante (41) comporte une gorge (40) dans son plan médian pour recevoir le bourrelet (39).

c) L'invention concerne la boyauterie, notamment pour les roues de bicyclette.

Fig.4

EP 0 133 072 A2

1

" Roue de bicyclette équipée d'un pneumatique de type boyau ".

La présente invention concerne une roue de bicyclette équipée d'un pneumatique de type "boyau".

Actuellement, les bicyclettes de compétition soit sur route, soit sur piste, comportent des roues à jante légèrement concave sur lesquelles est collé un ensemble pneumatique-chambre à air, habituellement appelé "boyau".

De tels boyaux sont fabriqués de façon industrielle en grandes et petites séries, les uns étant utilisés par les amateurs et à l'entraînement, les autres ayant des caractéristiques très précises, étant utilisés surtout par les professionnels.

Dans les deux cas, la structure du boyau est la même mais les matériaux utilisés et la fabrication sont différents.

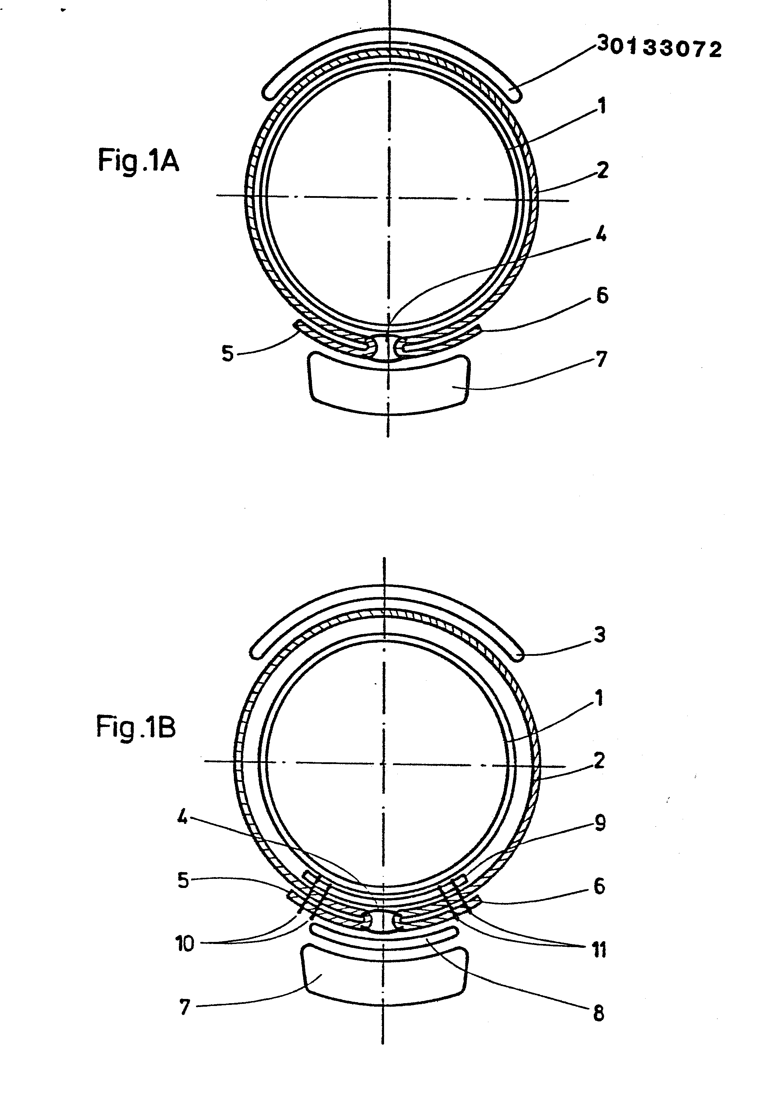

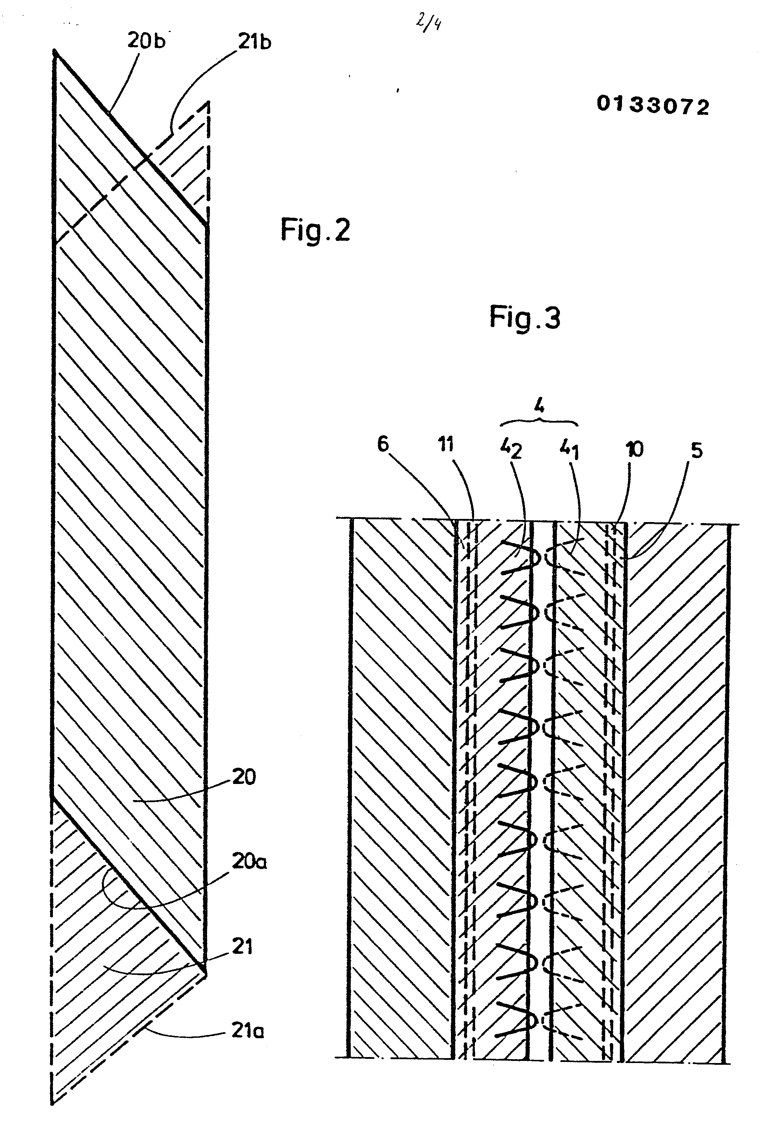

Selon la vue en coupe schématique de la figure 1, un boyau se compose d'une chambre à air en latex 1, entourée par une enveloppe formée d'une carcasse 2 garnie d'une bande de roulement 3. La carcasse 2 réalisée comme cela sera décrit à l'aide des figures 2 et 3, est une bande à deux nappes de fils croisés à 45° par rapport à la direction longitudinale ; les extrémités de cette bande sont aboutées pour former un manchon cylindrique de largeur appropriée pour permettre de réaliser un tore enveloppant la chambre à air 1 de façon quasi définitive, une couture à plat reliant bout à bout les bords rabattus du manchon cylindrique. En effet, avant d'enrouler le manchon cylindrique en forme de tore autour de la chambre à air, il faut renforcer les bords pour la couture en rabattant vers la face intérieure ou la face extérieure du futur tore, une bande 5, 6, la largeur des deux bandes correspondant sensiblement à la largeur de la jante 7. La couture 4 qui est à plat relie les deux bords mis bout à bout de la carcasse 2 pour former une enveloppe continue autour de la chambre à air 1. Extérieurement, la couture est revêtue d'une bande de protection dite "tresse" 8 destinée à protéger la couture 4 contre le frottement sur la jante 7. Cette tresse 8 est collée sur la carcasse 2 puis pour fixer le boyau sur la jante, on enduit celle-ci de colle et on met en place le boyau.

En fait, une telle structure (figure 1A) relativement grossière, correspond à la fabrication dite "en grande série", le poids de tels boyaux étant de l'ordre de 280 grammes.

Par contre, la fabrication en petites séries (figure 1B) sur commande, est plus complexe car elle doit, de façon très schématique, aboutir à un boyau aussi léger que possible (jusqu'à 95 grammes) tout en permettant un gonflement à une pression susceptible d'atteindre 15 kg.

Dans un tel boyau, le poids de chaque élément constitutif tels que la chambre à air, la carcasse, les coutures sont très importants.

Ainsi, la chambre à air est en latex extrêmement mince et, par suite, très fragile et très sensible à l'usure due aux frottements ; il est donc nécessaire de recouvrir la couture, intérieurement d'une bande ou tresse intérieure 9 cousue par une couture simple ou double (figurées par des traits traversants) 10, 11 sur les deux côtés de la carcasse 2 à travers les bandes rabattues 5, 6 et avant que ne soit réalisée la couture 4.

La réalisation des coutures 10, 11 est un travail extrêmement délicat puisque ces coutures sont très proches de la chambre à air 1. Bien que les coutures se fassent à plat, la chambre à air étant repliée au fond de la carcasse 2, il arrive de façon relativement fréquente que la chambre à air soit percée. Comme cette perforation ne peut se voir qu'après le gonflement d'essai du boyau terminé, aucune intervention n'est pratiquement plus possible et le boyau est à jeter.

La présence de la tresse intérieure complique également la réalisation de la couture 4 à cause de la faible place disponible.

La figure 2 montre une étape de la fabrication de la carcasse en superposant deux "tissus" 20, 21 ; chaque tissu 20, 21 est une nappe de segments de fils jointifs parallèles entre eux et aux petits côtés du losange formé par chaque tissu ; on réalise un "tissu" en dévidant un fil sur un cylindre suivant des spires jointives puis on enduit de colle, les spires ainsi mises en place et on découpe ce manchon de spires pour obtenir un "tissu" 20 ou 21 allongé, dont la longueur, une fois les extrémités 20a, 20b mises bout à bout, correspond à la périphérie du boyau. Comme indiqué, les spires sont parallèles aux petits côtés 20a, 20b dans le tissu 20 et aux petits côtés 21a, 21b pour le tissu 21. Les deux tissus 20, 21 sont placés l'un sur l'autre, avec un léger décallage en longueur, et avec les faces enduites l'une contre l'autre ; le sens des tissus 20, 21 est tel que les fils d'un tissu croisent les fils de l'autre. De façon quasi générale, les fils sont à 45° par rapport à l'axe de symétrie.

En pratique, la largeur d'un tissu correspond à plusieurs ossatures.

La figure 3 est une vue de-dessous partielle et schémétique d'un boyau selon la figure 1A montrant la disposition des diverses coutures, avant la mise en place de la tresse extérieure 8, notamment les deux parties 41, 42 de la couture 4.

De façon générale, les boyaux connus présentent un certain nombre d'inconvénients liés à la fois à leur structure, à leur procédé de fabrication et aux conditions d'utilisation.

Un boyau doit être à la fois extrêmement résistant, présenter un bon comportement de roulement et être très léger. Le boyau et la roue à jante actuels constituent un compromis entre ces différents impératifs. Toutefois, ce système n'est pas satisfaisant car la réalisation de la carcasse et surtout sa fermeture sur la chambre à air représentent des travaux très minutieux étant donné les faibles dimensions des pièces et les difficultés d'accès. La double couture pour la fermeture bord à bord de la carcasse est un travail très délicat.

Cette couture assure la liaison des deux bords de la carcasse et doit donc absorber les efforts très importants dus à la pression de gonflement et aux efforts considérables que le cycliste exerce surtout sur piste lors d'un démarrage et qui se transmettent par le boyau. La couture doit donc être réalisée à l'aide d'un fil très solide donc relativement gros et qui vient en saillie très prononcée à l'intérieur de la carcasse d'autant plus que, de son côté, la chambre à air, très mince et gonflée à des pressions très importantes, déforme la tresse intérieure.

De plus, les points d'accrochage de la couture dans les bords de la carcasse sont relativement fragiles : ces points de passage des fils de couture dans la carcasse se fait en réalité en écartant les fils constituant les deux tissus qui sont simplement juxtaposés et non enchevêtrés suivant le système chaîne-trame, selon la signification habituelle de l'expression "tissu". Cette zone de couture est rendue encore plus fragile par les coutures servant à la fixation de la tresse intérieure.

Enfin, l'accrochage du boyau sur la jante est nécessaire pour maintenir le boyau sur la jante. Or, comme le boyau peut être soumis à des efforts transversaux complexes, très importants, par exemple lorsque le cycliste fait tourner brutalement son guidon et présente la roue de travers par rapport à l'axe de déplacement, il est nécessaire que le collage du boyau sur la jante soit très résistant. A cela s'ajoute que toutes colles, surtout les colles thermofusibles ne peuvent pratiquement pas s'utiliser à cause de l'échauffement du pneumatique.

Enfin, du fait du collage, en cas de crevaison, le remplacement rapide du pneumatique n'est pas possible et nécessite le changement de la roue, car le collage doit sècher.

Le remplacement d'une roue est une opération habituelle en compétition ; par contre, à l'entraînement, lorsque le cycliste est seul, il sera obligé de changer son boyau crevé, mais il ne pourra pas coller son nouveau boyau qui ne sera pas tenu sur la jante et risquera de déjanter très rapidement à la moindre irrégularité du sol ou lors d'un faux mouvement.

En outre, les boyaux actuels sont relativement fragiles au niveau des flancs, par exemple lorsque le coureur prend un virage relativement penché, car à ce moment, le boyau touche la route avec une partie de ses flancs, c'est-à-dire de sa carcasse nue : les graviers peuvent alors endommager et transpercer les flancs.

La présente invention a pour but de créer une roue de bicyclette notamment de sport ou de compétition qui soit d'une structure très résistante et au moins aussi légère que les ensembles jante- boyau actuels, qui soit d'une fabrication plus simple et plus rapide et d'une utilisation plus sûre, plus efficace et plus longue que les solutions connues.

A cet effet, l'invention concerne un ensemble jante-pneumatique de type "boyau" pour bicyclette de compétition ou analogue, caractérisé en ce que les bords obtenus par rabattement des bandes latérales de la carcasse étant cousus l'un sur l'autre, par une couture traversante de façon à former un bourrelet de blocage et de centrage en saillie par rapport au contour torique du boyau à l'état gonflé et la jante, comportent une gorge dans son plan médian pour recevoir le bourrelet.

La combinaison de la forme entre le bourrelet et la gorge de la jante assure une blocage indéjantable du boyau sans nécessiter aucun collage. Cela permet donc le remplacement d'un boyau au cours d'une course d'entraînement ou sans nécessiter le remplacement de la roue sans pour autant créer une situation précaire ou dangereuse pour l'utilisateur. De plus, ces avantages ne pénalisent pas l'utilisateur par une augmentation du poids ou une quelconque réduction du confort, de la tenue de route et de façon générale, des caractéristiques de roulement.

Sur le plan de la fabrication, l'invention permet une simplification considérable, une réduction du temps de fabrication et une diminution des pertes.

La simplification de la fabrication résulte de la suppression de la tresse interne : donc la suppression de deux, voire quatre coutures se traduisant par un gain de poids de l'ordre de 10 grammes (tresse et coutures). Une simplification découle de la couture formant le bourrelet : une telle couture est très simple à réaliser et surtout beaucoup moins délicate et moins dangereuse que la couture à plat.

La réduction du temps de fabrication est liée aux simplifications ci-dessus et correspond environ à une réduction de 15 à 25 % suivant les cas.

La réduction des pertes et leur quasi suppression résultent de la sécurité avec laquelle se réalise la couture dans le bourrelet qui est très éloigné de la chambre à air à l'état replié dans la carcasse.

Sur le plan de l'utilisation, le boyau est beaucoup plus fiable puisque la couture dans le bourrelet n'a pas à recevoir tous les efforts exercés par et sur la carcasse puisque la plus grande partie de ces efforts sont absorbés pour le bourrelet lui-même et son blocage dans la gorge de la jante.

Il n'est pas non plus nécessaire de protéger la couture par rapport à la jante puisqu'elle ne s'applique pas à plat comme dans les boyaux connus.

On supprime ainsi la tresse intérieure et la tresse extérieure, ce qui réduit le poids.

La mise en place d'un boyau est simple et immédiate puisqu'il n'y a plus encollage ni temps de séchage de la colle.

Suivant une autre caractéristique de l'invention, la carcasse est munie d'un fil de renforcement inextensible , placé sur la carcasse suivant la ligne de rabattement des bandes latérales.

Grâce à ce renforcement, la garantie de la fixation du boyau sur la jante est encore renforcée par les conditions d'utilisation très sévères comme les compétitions sur piste.

Ce renforcement évite également toute déchirure du bord au niveau de la couture.

De façon particulièrement intéressante, la carcasse comporte une garniture fixée au moins partiellement par la couture du bourrelet entre les bords au moins du côté de la couture le plus proche de la chambre à air et recouvrant la couture.

Cette garniture dont la mise en place ne nécessite aucun travail supplémentaire, constitue une sécurité supplémentaire évitant tout accident lors de la réalisation de la couture et tout contact entre la couture et la chambre à air.

Suivant une autre caractéristique, l'ensemble jante-pneumatique comporte une garniture extérieure, fixée entre les bords formant le bourrelet pour venir s'appliquer contre le fond, cette garniture étant en une matière souple présentant un coefficient de friction élevée.

Suivant une autre caractéristique, la garniture est fixée au moins partiellement par la couture du bourrelet entre les bords au moins du côté de la couture le plus proche de la chambre à air et recouvrant la couture.

Cette garniture augmente l'adhérence du bourrelet dans la gorge et, en particulier, contre le fond, lorsque la chambre à air est gonflée. On obtient ainsi une fixation périphérique du boyau dans la jante analogue, voire supérieure, à un collage tout en constituant une fixation amovible ne présentant pas les inconvénients du collage (nettoyage des traces de colle lors de l'enlèvement d'un boyau percé, enduction de colle, séchage de la colle, etc ...).

Un ensemble jante-pneumatique, selon l'invention, peut ainsi être réparé en quelques secondes et être utilisé immédiatement après la réparation sans qu'il soit nécessaire de laisser sécher.

Cela constitue un avantage considérable pour l'invention. En effet, dans certaines manifestations sportives sur piste, il arrive que, par suite de l'état de la piste, les coureurs crèvent très fréquemment. Etant donné le temps de séchage relativement long de la colle, (temps nécessaire puisque les efforts que doit transmettre la jante au pneumatique sont considérables lors des démarrages), les coureurs sont, de ce fait, obligés de s'équiper d'un grand nombre d'ensembles jante-pneumatique de remplacement.

Or, de tels ensembles, légers, très perfectionnés, et résultant d'une fabrication artisanale, sont extrêmement coûteux.

Il est donc de première importance que, selon l'invention, on puisse très rapidement remplacer un pneumatique crevé et utiliser immédiatement l'ensemble jante-pneumatique sans aucun temps de séchage. Le coureur peut dans ces conditions n'avoir à sa disposition qu'un jeu de roues de rechange (roue avant, roue arrière).

Suivant une autre caractéristique de l'invention, la garniture extérieure est en une mousse de caoutchouc et de matière synthétique ou une bande de caoutchouc.

Suivant une autre caractéristique de l'invention, l'ensemble est caractérisé en ce que la garniture située à l'intérieur en regard de la chambre à air et la garniture extérieure sont reliées l'une à l'autre.

Suivant une autre caractéristique de l'invention, la garniture intérieure et la garniture extérieure sont réalisées dans la même matière.

La fabrication du pneumatique est particulièrement simple si comme précisé ci-dessus, la garniture intérieure et la garniture extérieure sont en une seule pièce et en particulier lorsque ces deux garnitures sont dans la même matière. Il suffit en effet de pincer cette garniture entre les deux bords de l'enveloppe du pneumatique et de faire passer la couture en laissant déborder une partie de la garniture vers le haut pour former la garniture intérieure protégeant la chambre à air et une partie vers le bas pour former la garniture inférieure assurant le contact avec le fond de la gorge de la jante.

Suivant une autre caractéristique de l'invention, la carcasse comporte un enroulement d'un fil inextensible, à la périphérie extérieure au niveau et sous la bande de roulement pour former une armature périphérique.

Suivant une autre caractéristique de l'invention, les bandes latérales ont une largeur correspondant au moins à la largeur des flancs de la carcasse pour venir au moins partiellement sous la bande de roulement.

En choisissant des fils suffisamment minces, il est possible à poids égal d'avoir des bandes latérales rabattues, occupant toute la largeur des flancs et dont les bords sont recouverts par la bande de roulement. Comme du fait du rabattement, la direction des fils des tissus des bandes latérales rabattues est opposée à celle des autres parties du tissu de la carcasse sur lesquelles les bandes sont rabattues, les flancs sont ainsi constitués par quatre épaisseurs de fils dont les directions sont chaque fois opposées, ce qui constitue une protection particulièrement efficace contre la pénétration des graviers.

La présente invention sera décrite plus en détail à l'aide des dessins annexés, dans lesquels :

- les figures 1A et 1B sont des vues en coupe schématique d'une jante et d'un boyau selon l'art antérieur,

- la figure 2 est un schéma de la forme des nappes servant à la réalisation de la carcasse du boyau, selon la figure 1,

- la figure 3 montre un détail en vue de-dessous de la couture fermant la carcasse.

- la figure 4 est une vue en coupe analo- gue à la figure 1 d'un boyau et d'une jante selon l'invention.

    - la figure 5 est une vue de côté d'un boyau gonflé montrant la forme de la couture,

    - la figure 6 est une vue en coupe générale de l'ensemble, jante-pneumatique, selon un autre mode de réalisation de l'invention,

    - la figure 7 est une vue de détail de la figure 6.

    De façon générale, les échelles utilisées dans les diverses figures sont très différentes les unes des autres et ont été choisies uniquement pour faciliter la représentation et la compréhension ; il en est de même des épaisseurs des différentes nappes de fils ou autres qui ont été volontairement exagérées.

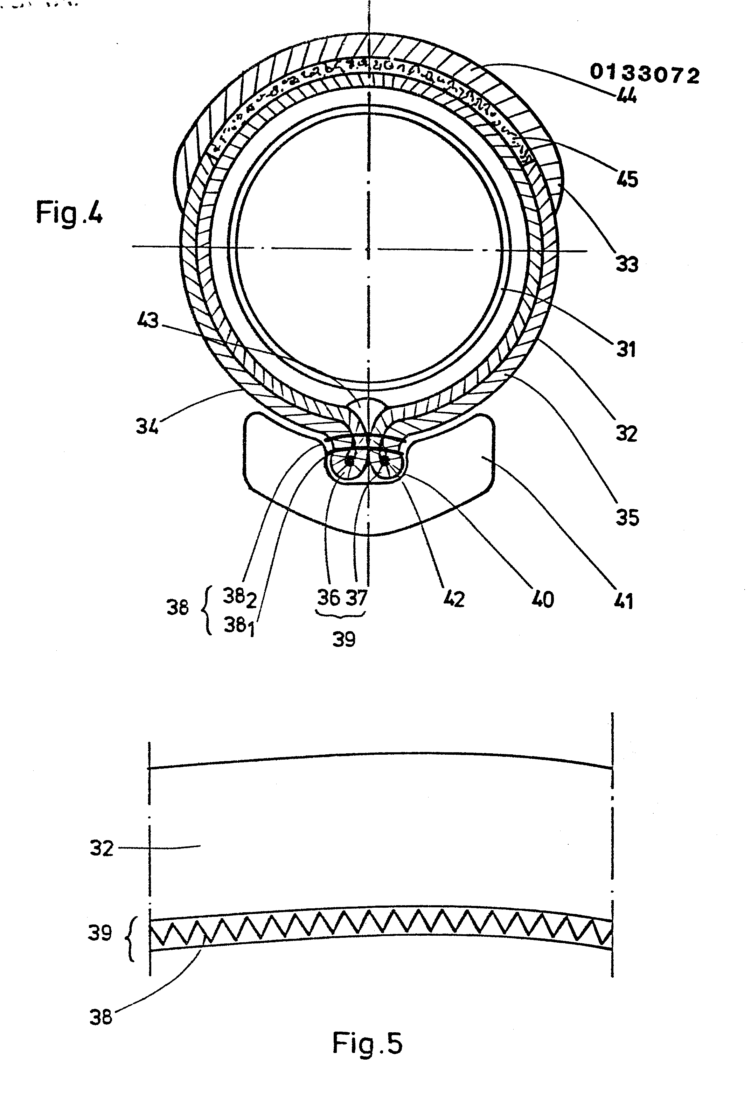

    Selon la figure 4, le boyau de l'invention se compose d'une chambre à air 31 entourée d'une carcasse 32 munie d'une bande de roulement 33. La carcasse 32 est obtenue comme dans l'art antérieur à partir d'un manchon cylindrique à deux "tissus" de fils croisés, non représenté, qui est mis en forme de tore autour de la chambre à air. Des bandes latérales 34, 35 sont rabattues extérieurement sur les flancs de la carcasse 32 proprement dite. La largeur de ces bandes 34, 35 est choisie en fonction de la destination du boyau et suivant les possibilités de poids.

    Ainsi, pour une carcasse réalisée avec des fils très minces, correspondant par exemple à une répartition linéaire des fils dans les deux tissus comprise entre 45-80 fils par centimètre, si l'on choisit des fils fins (correspondant par exemple à 80 fils/cm, il sera possible à poids égal ou inférieur, de choisir une largeur des bandes latérales 34, 35, telles que les bandes une fois rabattues sur la carcasse, occupent pratiquement les deux flancs ; ils doublent ainsi ces flancs

12

et en augmentant considérablement la résistance à la crevaison sans augmenter le poids. Les bords 36, 37 ainsi réalisés après rabattement des bandes latérales 34, 35, sont appliqués à plat l'un sur l'autre (ce qui correspond à une épaisseur égale à quatre fois l'épaisseur de la carcasse) pour être cousus ainsi à plat par une couture 38 par exemple en dents de scie avec passage de fil à deux hauteurs différentes (fils 381, 382). Les deux bords 36, 37 forment ainsi un bourrelet 39 en saillie par rapport au contour torique du boyau une fois gonflé.

Ce bourrelet 39 est destiné à venir se loger et se bloquer dans une gorge périphérique 40 réalisée dans le plan de symétrie dans la jante 41. Ce bourrelet assure le centrage et le blocage du boyau sur la jante sans nécessiter aucun moyen auxiliaire tel que de la colle, grâce à cette simple liaison par encastrement.

Suivant une variante, il est particulièrement intéressant de déposer sur la carcasse 32 avant de rabattre et de coller les bandes latérales 34, 35 sur la carcasse 32, plusieurs spires d'un fil 42 très résistant, et très peu, voire pas extensible de façon à augmenter la résistance des bords à toute tentative de déjantage. Le fil 42 a également l'avantage de consolider la couture 38 et de permettre de rapprocher celle-ci de l'extrémité des bords 36, 37.

Suivant une variante, comme dans certaines applications, le boyau est gonflé à des pressions élevées qui tendent à ouvrir la partie "supérieure" 382 de la couture, on insère au moins partiellement entre les deux bords 36, 37 et avant de réaliser la couture 38, une garniture 43 par exemple en feutre ou en mousse. Cette garniture 43 est fixée par la partie supérieure 382 de la couture 38 de façon à la recouvrir et à éviter que la chambre à air 31 ne puisse venir en contact sur les fils de la partie supérieure de la couture.

Enfin suivant une autre variante, avant la mise en place de la bande de roulement 44, lorsque les bandes latérales 34, 35 sont larges, on dévide une ou plusieurs couches de spires d'un fil très résistant, de préférence pratiquement pas extensible aux conditions d'utilisation, de façon à former une armature périphérique 45 qui sera recouverte par la bande de roulement 44 et augmentera notamment la résistance à la crevaison.

La figure 5 montre un exemple de couture 38 possible pour la fermeture de la carcasse 32 et la réalisation du bourrelet 39.

A titre d'exemple, pour des boyaux qui ont habituellement des diamètres de l'ordre de 18 à 22 millimètres, il est intéressant de réaliser un bourrelet d'une hauteur de quelques millimètres par exemple 2 millimètres.

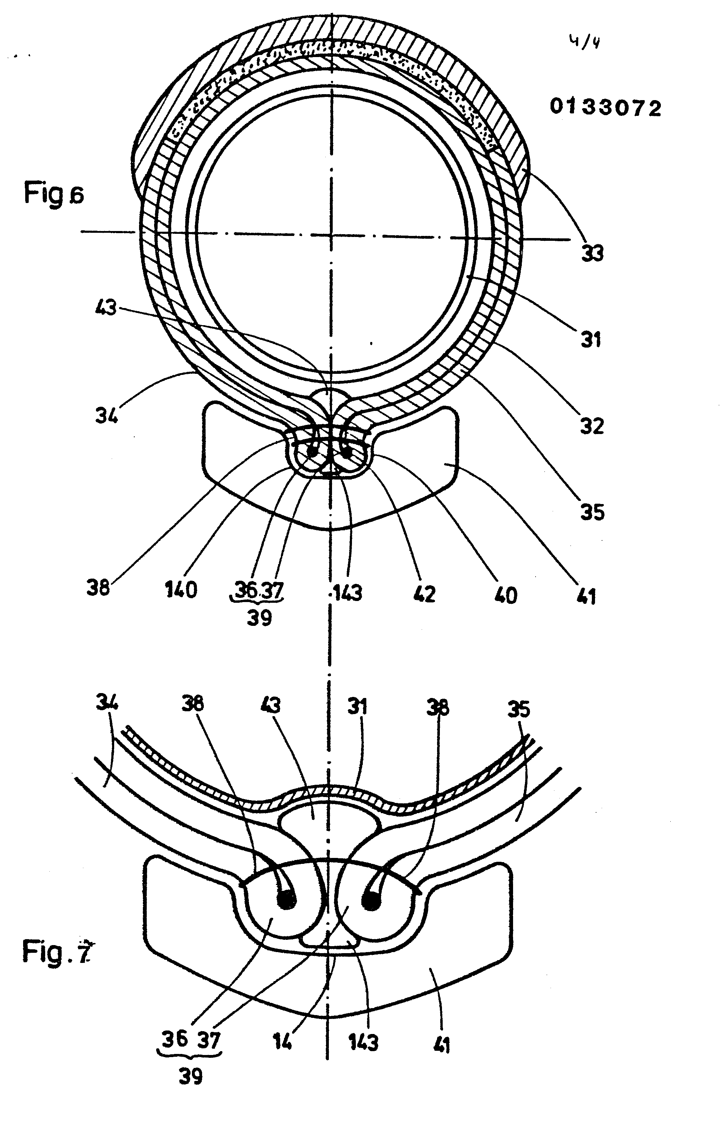

Selon la figure 6, la variante de boyau qui correspond, pour l'essentiel à la figure 4 se compose d'une chambre à air 31, d'une carcasse 32 avec une bande de roulement 33 et des bandes latérales 34, 35 formant des bords 36, 37 après rabattement sur une ou plusieurs spires d'un fil 42 très résistant et assemblage par des coutures 38. Le bourrelet 39 vient se loger dans la gorge périphérique 40 de la jante 41. Une garniture 43 est fixée par la couture 38 de façon à recouvrir la couture et à éviter que la chambre à air 31 ne puisse arriver en contact avec les fils de la couture.

Cette garniture 43 est complétée par une garniture extérieure 143 qui dépasse par rapport aux bourrelets 36, 37 de façon à venir s'appuyer contre le fond 140 de la gorge 40.

Cette garniture extérieure 143 est de préférence réalisée en un matériau présentant un coefficient de friction élevé, par exemple du caoutchouc mousse

14

ou analogue ou une matière synthétique non glissante.

Cette garniture extérieure 143 est pressée en même temps que le talon 39 contre le fond 140 lorsque le boyau est gonflé. Cette garniture assure le blocage en glissement de la jante contre le talon 39 du boyau.

La garniture extérieure 143 peut être en une matière différente de la garniture 43 puisque la garniture 43 a principalement pour but d'éviter le frottement entre la chambre à air 31 et les coutures 38 alors que la garniture extérieure 143 a pour but d'augmenter l'adhérence. Toutefois, ces deux garnitures 43, 143 peuvent être solidarisées l'une à l'autre pour faciliter la mise en place de l'ensemble 43, 143 et la réalisation des coutures 38. Il peut également s'agir d'une seule pièce réalisée dans la même matière. En effet, si l'on choisit une mousse de caoutchouc ou de matière synthétique, cette mousse permet d'augmenter l'adhérence du talon 39 contre le fond 140 pour la partie qui constitue le bourrelet extérieur 143 alors que la partie qui constitue le bourrelet intérieur 43 assure le recouvrement des coutures 38.

Un tel exemple est représenté à la figure 7.

15

R E V E N D I C A T I O N S

1°) Ensemble jante-pneumatique de type "boyau" pour bicyclette de compétition ou analogue, ensemble formé d'une jante sur laquelle est fixé un pneumatique de type "boyau", ce dernier étant formé d'une chambre à air contenue dans une carcasse munie d'une bande de roulement, les bandes latérales de la carcasse étant rabattues sur la carcasse et les bords ainsi obtenus étant réunis par une couture, les bords obtenus par rabattement des bandes latérales de la carcasse étant cousus l'un sur l'autre, par une couture traversante de façon à former un bourrelet de blocage et de centrage en saillie par rapport au contour torique du boyau à l'état gonflé et la jante comporte une gorge dans son plan médian pour recevoir le bourrelet.

2°) Ensemble selon la revendication 1, caractérisé en ce que la carcasse (32) est munie d'un fil de renforcement inextensible, placé sur la carcasse suivant la ligne de rabattement des bandes latérales (34, 35).

3°) Ensemble selon la revendication 1, caractérisé en ce que la carcasse comporte une garniture (43) fixée au moins partiellement par la couture du bourrelet entre les bords au moins du côté de la couture le plus proche de la chambre à air et recouvrant la couture.

4°) Ensemble selon la revendication 1, caractérisé en ce que la carcasse (32) comporte un enroulement d'un fil inextensible, à la périphérie extérieure au niveau et sous la bande de roulement (44) pour former une armature périphérique (45).

5°) Ensemble selon la revendication 1, caractérisé en ce que les bandes latérales (34, 35) ont une largeur correspondant au moins à la largeur des flancs de la carcasse (32) pour venir au moins partiellement sous la bande de roulement (44).

6°) Ensemble selon la revendication 1, caractérisé en ce qu'il comporte une garniture extérieure (143), fixée entre les bords (36, 37) formant le bourrelet (39) pour venir s'appliquer contre le fond (140), cette garniture étant en une matière souple présentant un coefficient de friction élevée.

7°) Ensemble selon la revendication 6, caractérisé en ce que la garniture extérieure (143) est en une mousse de caoutchouc et de matière synthétique ou une bande de caoutchouc.

8°) Ensemble selon lequel la carcasse comporte une garniture fixée au moins partiellement par la couture du bourrelet entre les bords au moins du côté de la couture le plus proche de la chambre à air et recouvrant la couture, selon la revendication 3, ensemble caractérisé en ce que la garniture (43) située à l'intérieur en regard de la chambre à air (31) et la garniture extérieure (143) sont reliées l'une à l'autre.

9°) Ensemble selon l'une quelconque des revendications 6 et 8, caractérisé en ce que la garniture intérieure (43) et la garniture extérieure (143) sont réalisées dans la même matière.

ORIGINAL

Cabinet
BERT de KERAVENANT & HERRBURGER

30133072

Fig.1A

Fig.1B

0133072

Fig.2

20b  21b

20

20a

21

21a

Fig.3

6  11  4₂  4₁  10  5

$$4$$

0133072

Fig.4

44

45

33

31

32

35

43

34

38 { 38₂
       38₁

36 37

39

42

40

41

32

39 {

38

Fig.5

Fig 6

Fig. 7